# EUROPÄISCHE PATENTSCHRIFT

(11) **EP 2 589 837 B1**
(45) Veröffentlichungstag und Bekanntmachung des Hinweises auf die Patenterteilung: **24.09.2014**
(21) Anmeldenummer: 12007121.2
(22) Anmeldetag: 13.10.2012
(51) Int. Cl.: F16H 57/04

(54) **Getriebe**
Gearbox
Engrenage

(30) Priorität: 04.11.2011 DE 102011117655
(43) Veröffentlichungstag der Anmeldung: 08.05.2013
(73) Patentinhaber: Robert Bosch GmbH, 70442 Stuttgart (DE)
(72) Erfinder: Bauer, Gerhard, 58453 Witten (DE)
(74) Vertreter: Thürer, Andreas

(56) Entgegenhaltungen:
- EP-A1- 2 199 645
- DE-A1-102006 052 101
- DE-U1-202004 021 807
- JP-A- 2008 051 139
- US-A1- 2007 241 043
- US-A1- 2011 140 442

## Beschreibung

Die Erfindung betrifft ein Getriebe mit Getriebekomponenten, die zumindest zwei kämmende Zahnräder umfassen, und mit einem Getriebegehäuse, in dem die Zahnräder des Getriebes eingesetzt sind, wobei das Getriebe eine Vorrichtung umfasst, die so ausgebildet und in dem Getriebegehäuse angeordnet ist, das eine von einer Getriebekomponente und/oder dem Getriebegehäuse abgelöstes Bauteil von einem Kämmeingriff der Zahnräder ferngehalten ist und wobei die Vorrichtung eine Fang- und Ableitvorrichtung ist.

### Stand der Technik

Ein derartiges Getriebe ist aus der EP 2 199 645 A1 bekannt. Dieses Getriebe ist als konventionelles Getriebe ausgebildet und weist in seinem Inneren eine Fang- und Ableitvorrichtung für Abrieb, Pittings, abbrechende Grate oder andere Partikel, welche insbesondere von den beweglichen Teilen innerhalb des Getriebes stammen, auf. Die Fang- und Ableitvorrichtung dieses Getriebes ist als Beölungsrinne ausgebildet, die zumindest teilweise aus magnetisiertem Material besteht. Diese Beölungsrinne ist an einer geeigneten Stelle in dem Getriebe angeordnet. Diese Druckschrift offenbart die Merkmale des Oberbegriffs des Anspruchs 1.

Ein ähnliches Getriebe ist aus der DE 10 2006 052 101 A1 bekannt, das einen Kupplungsgetrieberaum aufweist, in dem in sogenannten Kavernen Kupplungs-Feinstäube aufgesammelt werden. Ähnliche Vorrichtungen sind im Übrigen aus der US 2007/241043 A1 und der JP 2008 051 139 A bekannt.

Ein weiteres Getriebe ist aus der DE 20 2004 021 807 U1 bekannt. Dieses Getriebe ist als Planetengetriebe ausgebildet und bildet die Vorstufe für einen großen Windturbinengenerator. Das Planetengetriebe umfasst ein Hohlrad, zwei oder mehr Planetenräder und ein Sonnenrad, wobei eines der Zahnräder oder mehrere Zahnräder eine Vielzahl von Zähnen umfassen, die eine superfinish bearbeitete Oberfläche mit einer Oberflächenrauigkeit von Rₐ= 0,25 µm der weniger aufweisen. Durch die so superfinishbearbeitete Oberfläche soll der Metallabrieb an den Zahnrädern verringert oder eliminiert werden. Der Metallabrieb kann einerseits zu einem übermäßigen Verschleiß der Zähne und somit zu einem Ausfall der Zahnräder führen. Andererseits kann der Abrieb in Lager geraten und dort zu Lagerschäden führen.

Der Erfindung liegt die Aufgabe zugrunde, ein Getriebe bereitzustellen, das hinsichtlich Betriebssicherheit und seiner Betriebszuverlässigkeit verbessert ist.

Diese Aufgabe wird dadurch gelöst, dass das Getriebe ein Planetengetriebe ist, dass die Fang- und Ableitvorrichtung als zwei sich überlappende Nasen ausgebildet sind und dass die Nasen als Ringnasen ausgebildet sind, die auf dem gesamten Umfang einer Stütze für ein Hohlrad und an dem Getriebegehäuse angeordnet sind. Dadurch ist ein von einer Getriebekomponente und/oder dem Getriebegehäuse abgelöstes Bauteil von einem Kämmeingriff der Zahnräder ferngehalten. Insbesondere bei großen Getrieben mit hohen zu übertragenden Leistungen kann es vorkommen, dass sich ein beliebiges Bauteil von dem Getriebe löst, das aber für die Funktion des Getriebes keine sofort relevante Bedeutung aufweist. So kann es vollkommen ausreichend sein, die entsprechende Getriebekomponente, von der sich das Bauteil gelöst hat, im Rahmen einer üblichen Wartung zu ersetzen oder zu reparieren. Allerdings kann das abgelöste Bauteil Verzahnungsschäden verursachen, wenn es in den Kämmeingriff von zwei Zahnrädern gelangt. Diese Möglichkeit wird durch die erfindungsgemäße Vorrichtung vermieden. Die Fang- und Ableitvorrichtung ist so zu bruchgefährdeten Bauteilen des Getriebes ausgerichtet, dass diese bei einem möglichen Bruch aufgefangen und von einem Kämmeingriff der Zahnräder weggeleitet werden. Durch eine Integration in vorhandene Bauteile ist kein oder nur ein geringer zusätzlicher Herstellungsaufwand oder Montageaufwand des Getriebes verursacht. Die Anordnung der Nasen an einer Stütze für das Hohlrad und an dem Getriebegehäuse erfordert nur eine einmalige konstruktive Auslegung der entsprechenden Nasen, wobei durch die so gestalteten Nasen zumindest kein zusätzlicher Bearbeitungs- und Montageaufwand hervorgerufen wird.

In Weiterbildung der Erfindung ist das Bauteil eine Schraube, ein Schraubenbolzen, eine Mutter, ein Teil einer Schraube, ein Teil eines Schraubenbolzens, ein Teil einer Mutter oder ein sonstiges Teil. Insbesondere bei einer oder mehreren Schraubverbindungen aufweisenden Zahnrädern kann es vorkommen, dass beispielsweise aufgrund einer falsch angezogenen Schraubenverbindung eine Schraube oder Mutter dieser Schraubverbindung bricht, wobei dieser Bruch keine direkte Auswirkung auf die Funktion des Zahnrads und somit des Getriebes hat.

In Weiterbildung der Erfindung ist eine Strömungsenergieanlage, insbesondere eine. Windenergieanlage oder eine Meeresenergieanlage und/oder ein beliebiger Abtriebsstrang mit einem Getriebe nach einem der vorhergehenden Ansprüche ausgestaltet. Abschließend wird darauf hingewiesen, dass der Erfindungsgegenstand zur präventiven Vermeidung von Verzahnungsschäden ausgelegt ist, die beispielsweise beim Eintreten in eine Windenergieanlage große Folgeschäden verursachen könnten. So kann es beispielsweise auch vorgesehen sein, eine Detektionseinrichtung an der Fang- und Ableitvorrichtung oder der Ölwanne vorzusehen, die ein abgelöstes Bauteil detektiert. Diese Detektionseinrichtung kann dann auch mit einer Abschaltvorrichtung verbunden sein, die im Folge des detektierten abgelösten Bauteils eine Abschaltung der Windenergieanlage auslöst, ohne dass weiter reichende Folgeschäden an der Windkraftanlage eintreten.

Weitere vorteilhafte Ausgestaltung der Erfindung sind der Zeichnungsbeschreibung zu entnehmen, in der ein in den Figuren dargestelltes Ausführungsbeispiel der Erfindung näher beschrieben ist.

Es zeigen:
- Figur 1: eine Seitenansicht einer Windkraftanlage mit einem erfindungsgemäß ausgestalteten Getriebe,
- Figur 2: eine Schnittdarstellung eines Ausschnitts aus einer Stufe eines Planetengetriebes für eine Windenergieanlage und
- Figur 2a: eine Ausschnittsvergrößerung aus der Figur 2.

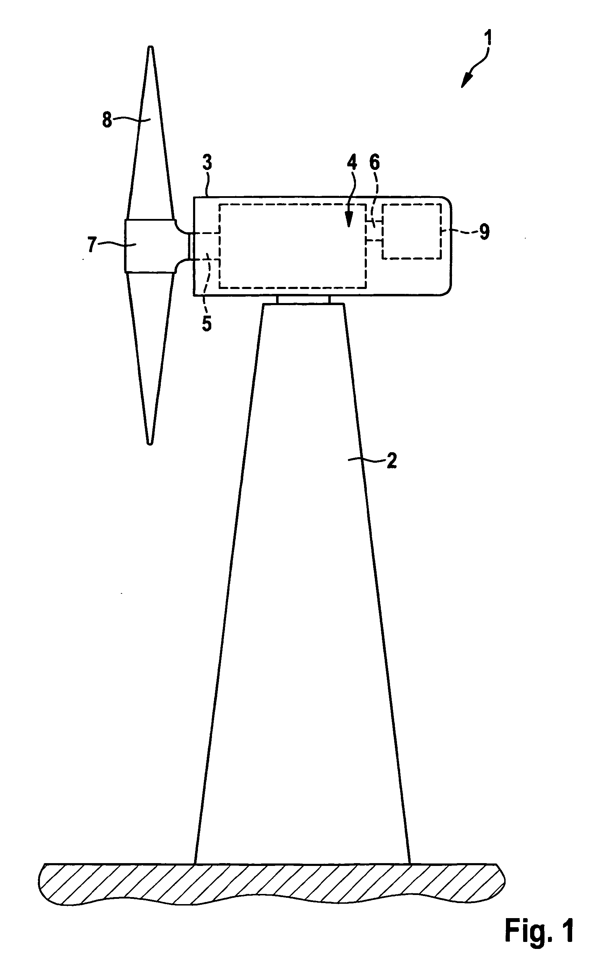

Figur 1 zeigt eine Seitenansicht einer Windkraftanlage 1 mit ihren wesentlichen Baugruppen. Die Windkraftanlage 1 weist einen Turm 2 auf, auf dem eine um eine Vertikalachse drehbar gelagerte Gondel 3 in Form eines Maschinengehäuses angeordnet ist. In der Gondel 3 ist ein Getriebe 4 drehfest befestigt, wobei das Getriebe 4 eine Antriebswelle 5 und eine Abtriebswelle 6 aufweist. Die Antriebswelle 5 des Getriebes 4 ist mit einer Nabe 7 eines mehrere Rotorblätter 8 aufweisenden Rotors verbunden. Die Abtriebswelle 6 ist mit einer anzutreibenden Antriebsvorrichtung in Form eines Generators 9 drehverbunden. Das Getriebe 4 ist so ausgelegt, dass es eine langsame Drehbewegung der Antriebswelle 5 in eine schnelle Drehbewegung der Abtriebswelle 6 umsetzt. Mittels der Windkraftanlage 1 wird elektrische Energie erzeugt, indem der von dem Wind in Drehbewegung versetzte Rotor die Drehbewegung über die Antriebswelle 5 in das Getriebe 4 einleitet. Das Getriebe 4 setzt die Drehbewegung in eine schnellere Drehbewegung um und schließlich wird über die Abtriebswelle 6 die schnelle Drehbewegung zur Erzeugung von Strom auf den Generator 9 übertragen.

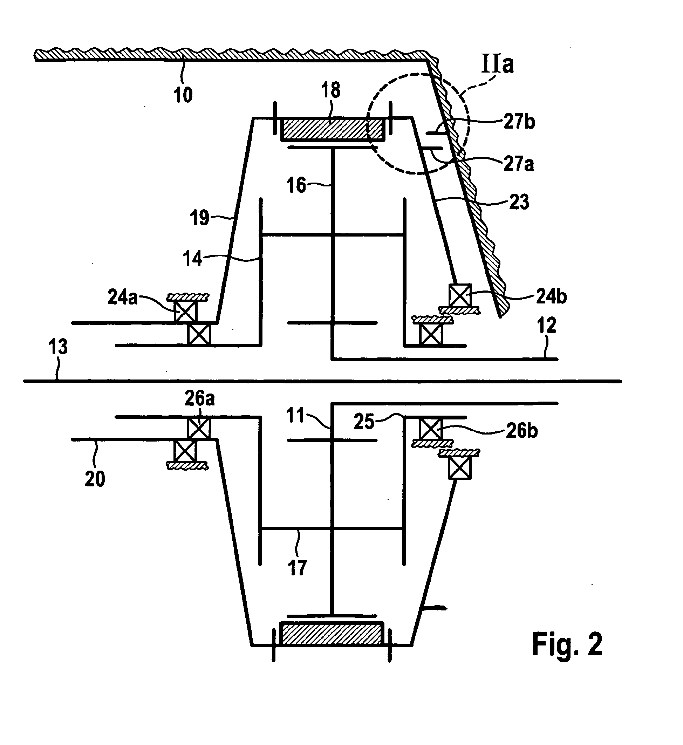

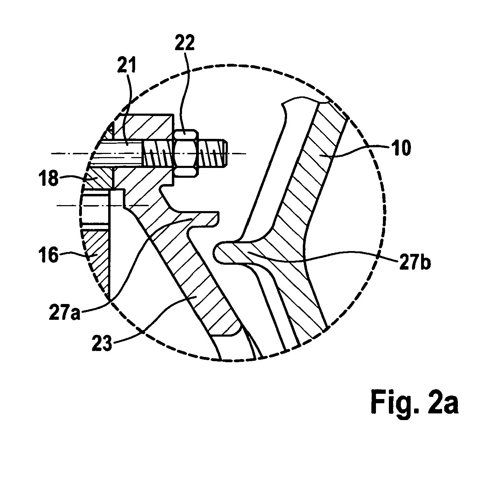

Figur 2 zeigt schematisiert einen Ausschnitt aus einem als Differentialgetriebe für eine Windenergieanlageausgebildeten Getriebe 4, das mehrere Planetengetriebe und Stirnradgetriebe aufweisen kann beziehungsweise aufweist. Das dargestellte Planetengetriebe betrifft eine Stufe des Getriebes 4, wobei die linke Seite des Getriebes 4 mit der Rotorseite und die rechte Seite mit der Generatorseite des Getriebes 4 verschaltet ist.

Das die dargestellte Stufe des Planetengetriebes aufnehmende Getriebegehäuse 10 ist mit weiteren Getriebegehäusen des Gesamt-Getriebes 4 verbunden, insbesondere verschraubt. Ein Sonnenrad 11 des Planetengetriebes ist auf einer Sonnenradwelle 12 angeordnet, wobei die Sonnenradwelle 12 vorzugsweise über ein Stirnradgetriebe mit dem Generator 9 der Windkraftanlage verbunden ist. Die Sonnenradwelle 12 ist in dem Getriebegehäuse 10 gelagert und wird von einem Durchführungsrohr 13 durchdrungen. Mit dem Sonnenrad 11 kämmen drei auf einem Planetenradträger 14 über Lager gelagerte Planetenräder 16, die zu dem Umfang des Sonnenrads 11 verteilt angeordnet sind. Der Planetenradträger 14 ist mit einer Planetenradträgerwelle 17 verbunden beziehungsweise mit dieser einstückig ausgebildet, die beispielsweise mit einem Sonnenrad einer ersten Sonnenradstufe A1 des Getriebes 4 verbunden ist.

Eine Hohlrad 18 des Planetengetriebes ist ebenfalls drehbar in dem Getriebegehäuse 10 angeordnet und über einen Mitnehmer 19 mit einer Hohlradwelle 20 verbunden oder mit dieser einstückig ausgebildet. Die Hohlradwelle 20 ist beispielsweise mit einem Sonnenrad einer zweiten Planetenradgetriebestufe A2 des Getriebes 4 verbunden. Das Hohlrad 18 ist mit dem Mitnehmer 19 mittels Schraubenbolzen 21 und Muttern 22 verschraubt. Auf dem Umfang des Hohlrads 18 ist eine Vielzahl von solchen Schraubverbindungen mit dem Mitnehmer 19 angeordnet. Dabei ist auf der gegenüberliegenden Seite zu dem Mitnehmer 19 eine Stütze 23 vorgesehen, die über ein einstellbares Stützenlager 24b in dem Getriebegehäuse 10 gelagert ist, während das Stützenlager 24a auf der gegenüberliegenden Seite ein Festlager ist. Ebenso ist auf dieser Seite des Planetengetriebes ein Planetenstegträger 25 vorgesehen, der in einem einstellbaren Planetensteglager 26b gegenüber dem Getriebegehäuse 10 drehbar gelagert ist, während auf der gegenüberliegenden Seite das Planetensteglager 26a auch hier ein Festlager ist.

Die Stütze 23 ist mit den erwähnten Schraubenverbindungen bestehend aus den Schraubenbolzen 21 und den Muttern 22 mit dem Hohlrad 18 und dem Mitnehmer 19 verschraubt, wobei die Muttern 22 auf der Seite der Stütze 23 angeordnet sind. Direkt unterhalb der Muttern 22 weist die Stütze 23 eine Nase 27a auf, die mit einer Nase 27b, die an das Getriebegehäuse 10 angeformt ist, zusammenwirkt. Die beiden Nasen 27a, 27b sind umlaufende Ringnasen, die auf dem gesamten Umfang der Stütze 23 und dem Getriebegehäuse 10 angeordnet sind. Hierbei ist zu berücksichtigen, dass die Stütze 23 unterhalb der Nase 27a stegförmig ausgebildet und insbesondere Durchtritte zu dem Hohlrad 18, den Planetenrädern 16 und dem Sonnenrad 11 aufweist. Aus Übersichtlichkeitsgründen sind die Nasen 27a, 27b nur im oberen Teil des Planetengetriebes dargestellt.

Die in der Figur 2a dargestellte Ausschnittsvergrößerung aus Figur 2 im Bereich der Nasen 27a, 27b benachbart zu der Verschraubung der Stütze 23 mit dem Hohlrad 18 zeigt die genaue Ausbildung der Nasen 27a, 27b.

## Patentansprüche

1. Getriebe (4) mit Getriebekomponenten, die zumindest zwei kämmende Zahnräder umfassen, und mit einem Getriebegehäuse (10), in das die Zahnräder des Getriebes (4) eingesetzt sind, wobei das Getriebe (4) eine Vorrichtung umfasst, die so ausgebildet und in dem Getriebegehäuse (10) angeordnet ist, dass eine von einer Getriebekomponente und/oder dem Getriebegehäuse (10) abgelöstes Bauteil von einem Kämmeingriff der Zahnräder ferngehalten ist und wobei die Vorrichtung eine Fang- und Ableitvorrichtung ist,
**dadurch gekennzeichnet, dass** das Getriebe ein Planetengetriebe ist und dass die Fang- und Ableitvorrichtung als zwei sich überlappende Nasen (27a, 27b) ausgebildet ist und dass die Nasen (27a, 27b) als Ringnasen ausgebildet sind, die auf dem gesamten Umfang einer Stütze (23) für ein Hohlrad (18) und an dem Getriebegehäuse (10) angeordnet sind.

2. Getriebe (4) nach Anspruch 1,
**dadurch gekennzeichnet, dass** das Getriebegehäuse (10) und/oder die Stütze (23) Gussteile sind.

3. Getriebe (4) nach einem der Ansprüche 1 oder 2,
**dadurch gekennzeichnet, dass** die Fang- und Ableitvorrichtung so ausgebildet ist, dass das Bauteil entlang der Fang- und Ableitvorrichtung in eine Ölwanne des Getriebes (4) gelangt.

4. Getriebe (4) nach einem der vorherigen Ansprüche,
**dadurch gekennzeichnet, dass** das Bauteil eine Schraube, ein Schraubenbolzen (21), eine Mutter (22), ein Teil einer Schraube, ein Teil eines Schraubenbolzens (21), ein Teil einer Mutter (22) und/oder ein sonstiges Teil ist.

5. Getriebe (4) nach Anspruch 4,
**dadurch gekennzeichnet, dass** das Bauteil Bestandteil eines Hohlrades (18) des Planetengetriebes ist.

6. Strömungsenergieanlage, insbesondere Windenergieanlage oder Meeresenergieanlage und/oder Antriebsstrang mit einem Getriebe (4) nach einem der vorherigen Ansprüche.

## Claims

1. Gear mechanism (4) having gear mechanism components which comprise at least two meshing gearwheels, and having a gear mechanism housing (10), into which the gearwheels of the gear mechanism (4) are inserted, the gear mechanism (4) comprising an apparatus which is configured and arranged in the gear mechanism housing (10) in such a way that a component which is detached from a gear mechanism component and/or the gear mechanism housing (10) is kept away from a meshing engagement of the gearwheels, and the apparatus being a catching and discharging apparatus, **characterized in that** the gear mechanism is a planetary gear mechanism, and **in that** the catching and discharging apparatus is configured as two overlapping lugs (27a, 27b), and **in that** the lugs (27a, 27b) are configured as annular lugs which are arranged on the entire circumference of a support (23) for an internal gear (18) and on the gear mechanism housing (10).

2. Gear mechanism (4) according to Claim 1, **characterized in that** the gear mechanism housing (10) and/or the support (23) are cast parts.

3. Gear mechanism (4) according to either of Claims 1 and 2, **characterized in that** the catching and discharging apparatus is configured in such a way that the component passes along the catching and discharging apparatus into an oil sump of the gear mechanism (4).

4. Gear mechanism (4) according to one of the preceding claims, **characterized in that** the component is a screw, a threaded bolt (21), a nut (22), a part of a screw, a part of a threaded bolt (21), a part of a nut (22) and/or another part.

5. Gear mechanism (4) according to Claim 4, **characterized in that** the component is a constituent part of an internal gear (18) of the planetary gear mechanism.

6. Flow energy plant, in particular wind power plant or ocean power plant and/or drive train having a gear mechanism (4) according to one of the preceding claims.

## Revendications

1. Engrenage (4) comprenant des composants d'engrenage qui comprennent au moins deux roues dentées s'engrenant, et comprenant un boîtier d'engrenage (10) dans lequel sont insérées les roues dentées de l'engrenage (4), l'engrenage (4) comprenant un dispositif réalisé et disposé dans le boîtier d'engrenage (10) de telle sorte qu'un composant détaché d'un composant d'engrenage et/ou du boîtier d'engrenage (10) soit maintenu à distance par un engagement d'engrènement des roues dentées et le dispositif étant un dispositif de capture et de déviation,
**caractérisé en ce que** l'engrenage est un engrenage planétaire et **en ce que** le dispositif de capture et de déviation est réalisé sous forme de deux ergots se chevauchant (27a, 27b) et **en ce que** les ergots (27a, 27b) sont réalisés sous forme d'ergots annulaires qui sont disposés sur toute la périphérie d'un support (23) pour une couronne (18) et au niveau du boîtier d'engrenage (10).

2. Engrenage (4) selon la revendication 1, **caractérisé en ce que** le boîtier d'engrenage (10) et/ou le support (23) sont des pièces coulées.

3. Engrenage (4) selon l'une quelconque des revendications 1 ou 2,
**caractérisé en ce que** le dispositif de capture et de déviation est réalisé de telle sorte que le composant parvienne le long du dispositif de capture et de déviation dans un carter d'huile de l'engrenage (4).

4. Engrenage (4) selon l'une quelconque des revendications précédentes,
**caractérisé en ce que** le composant est une vis, un boulon fileté (21), un écrou (22), une partie d'une vis, une partie d'un boulon fileté (21), une partie d'un écrou (22) et/ou une autre pièce.

5. Engrenage (4) selon la revendication 4,
**caractérisé en ce que**
le composant est un constituant d'une couronne (18) de l'engrenage planétaire.

6. Centrale à énergie d'écoulement, en particulier éolienne ou centrale d'énergie marémotrice et/ou chaîne cinématique comprenant un engrenage (4) selon l'une quelconque des revendications précédentes.
